(19) Europäisches Patentamt European Patent Office Office européen des brevets

(11) **EP 4 413 320 B1**

(12) **EUROPEAN PATENT SPECIFICATION**

(45) Date of publication and mention
of the grant of the patent:
**20.08.2025 Bulletin 2025/34**

(21) Application number: **22786832.0**

(22) Date of filing: **04.10.2022**

(51) International Patent Classification (IPC):
*G01B 5/00* (2006.01)   *G01B 11/00* (2006.01)

(52) Cooperative Patent Classification (CPC):
**G01B 5/0016; G01B 5/0004; G01B 5/008; G01B 11/005**

(86) International application number:
**PCT/GB2022/052506**

(87) International publication number:
**WO 2023/057745 (13.04.2023 Gazette 2023/15)**

(54) **SUPPORT**

TRÄGER

SUPPORT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.10.2021 EP 21200859**

(43) Date of publication of application:
**14.08.2024 Bulletin 2024/33**

(73) Proprietor: **Renishaw plc**
**Wotton-under-Edge, Gloucestershire GL12 8JR (GB)**

(72) Inventors:
• HUNTER, Stephen Paul
**Wotton-under-Edge, Gloucestershire GL12 8JR (GB)**
• LARKHAM, David Andrew
**Wotton-under-Edge, Gloucestershire GL12 8JR (GB)**

(74) Representative: **Phillips, Patrick James et al**
**Renishaw plc**
**New Mills**
**Wotton-under-Edge, Glos. GL12 8JR (GB)**

(56) References cited:
**JP-A- S6 186 109    SE-B- 394 513**
**US-A- 3 296 901**

## Description

The invention of the current application relates to a support for a positioning apparatus, in particular to a support for a coordinate measurement machine (CMM).

A positioning apparatus, such as a CMM, can comprise one or more members that are moveable relative to each other for positioning a tool, such as an inspection device, relative to a workpiece/artefact. For example, a CMM traditionally comprises a plurality of moveable members, e.g. linearly moveable members arranged in series. Generally, positioning apparatus are configured to facilitate relative motion of a tool and/or object in at least two or three mutually orthogonal dimensions, e.g. X, Y and Z. Such positioning apparatus are commonly known as "Cartesian" positioning apparatus (or Cartesian CMM).

Commonly relative movement between the tool and the object can be achieved by mounting the object on a platform and movement of the tool relative to the object. Movement of the tool in three orthogonal directions can be achieved by providing a stationary beam mounted on two (or more) supports, often referred to as a Y-beam. Another beam may be mounted perpendicular to the Y-beam in such a way as to allow movement along the Y-beam, this beam is often referred to as the X-beam. A further beam can be mounted to the X-beam orthogonal to both the X-beam and the Y-beam in such a way as to allow movement along the X-beam and to allow movement of the further beam (or part of the further beam) in the elongate direction of the further beam (often referred to as the Z-direction). The further beam is often called the quill. Examples of such arrangements are disclosed by US 5505004 and EP 2594893.

EP 2594893 discloses an apparatus having longitudinal members mounted on pillars and where the longitudinal members are connected by cross members to form a frame to cause deformations of the frame itself to be uncoupled from those of the pillars.

US 5505004 discloses an apparatus where a beam is connected to a first leg by a pivot joint which permits the beam to rotate in the vertical plane of the legs, and is connected to the second leg by a connection which permits the beam to rotate in a vertical plane and also move in a direction of its longitudinal axis in relation to the second leg.

JP S61 86109 A discloses in a weight compensating device, the weight of the main spindle head is supported by a pair of balance beams positioned facing each other with a balance therebetween, and thereby a bending force and rolling moment are prevented from being exerted on a cross rail.

US 3296901 A discloses a machine tool comprising a horizontal girder, a beam extending along the girder and adjustable means interconnecting them for compensating the lowering of the girder caused by bending thereof.

SE 394513 B relates to method and device for compensation of measurement errors with a coordinate measuring machine.

According to a first aspect of invention there is provided a positioning apparatus comprising a support extending in a first direction, and a beam extending in a second direction, the beam movably mounted to the support so as to be movable in the first direction and exerts a load on the support, wherein the support comprises a profile which when the beam exerts the load thereon the profile of the support is deformed such that the beam is maintained at a substantially constant orientation for all locations of the beam along the support. Optionally the first direction and the second direction are perpendicular. Optionally the first direction lies in a horizontal plane. Optionally the second direction lies in a horizontal plane. Optionally the load applied by the beam onto the support comprises a vertical component.

The support may be mounted on two or more pillars. Optionally the support may be at least 2 metres in length, optionally at least 2.5 metres in length, optionally at least 3 metres in length, optionally at least 3.5 metres in length, optionally at least 4 metres in length, optionally at least 5 metres in length.

Maintaining the beam at constant orientation for all locations along the support can allow improved metrological performance and/or can allow the use of longer beams. This can allow larger objects to be measured by a CMM. The invention can also allow the use of lighter beams compared to the prior art while providing the same measurement space. This can reduce the moving mass which can provide dynamic advantages.

Optionally deformation of the support by the load applied by the beam is such that the beam is maintained at a substantially constant height for all locations of the beam along the support. The beam may be maintained at a substantially constant angle relative to a horizontal plane.

Optionally the support is configured to compensate for YRX deformations. Optionally the support is configured to compensate for YRZ deformations. Optionally the support is configured to compensate for both YRX and YRZ deformations. Optionally the support is configured to compensate for XRY deformations. Optionally the support is configured to compensate for XRZ. Optionally the support is configured to compensate for both XRY and XRZ.

The beam may extend between the support and a substantially inflexible support. Optionally the substantially inflexible support comprises granite. Optionally the beam is movably mounted thereto so as to be movable in the first direction. Optionally the support comprises a (further) beam. Optionally the support comprises a pair of substantially parallel spaced apart supports.

Optionally the beam extends between the pair of spaced apart supports (which may comprise beams) and is movably mounted thereto so as to be movable in the first direction.

A first support of the pair of parallel spaced apart supports may be optimised for maintaining the beam at a constant angle, and a second support of the pair of parallel spaced apart supports may optimised for maintaining the beam at a constant height. Alternatively, both of the parallel spaced apart supports may be optimised for maintaining the beam at a constant angle. Optionally both of the parallel spaced apart supports may be optimised for maintaining the beam at a constant height. Optionally both of the parallel spaced apart supports may have identical profiles.

Optionally the positioning apparatus comprises a coordinate measurement machine.

According to a second aspect of invention there is provided a method of manufacturing the positioning apparatus of the first aspect. The method of manufacturing the positioning apparatus of the first aspect may comprise machining the support to have a profile such that when the beam exerts the load thereon the profile of the support is deformed such that the beam is maintained at a substantially constant orientation for all locations of the beam along the support. Optionally the profile is a non-linear profile. Optionally at least part of profile is curved. Optionally an error map is created for deviations of height and/or angle of the beam for locations of the beam along the support.

According to a third aspect of invention there is provided a method of measuring an object using the positioning apparatus of the first aspect. The method of measuring an object using the positioning apparatus of the first aspect may comprise deforming the support by a load applied by the beam as the beam moves along the support in the first direction such that the beam is maintained at a substantially constant orientation for all locations of the beam along the support. Optionally the load applied by the fist beam to the second beam is due to the weight of the second beam.

Embodiments of the invention will now be described, by way of example only, with reference to the accompanying drawings, in which:

Figure 1 shows a prior art CMM;

Figure 2 shows a schematic representation of part of a CMM;

Figure 3 shows part of a CMM;

Figure 4 shows calculations for a 3.5 metre y-travel Y-beam;

Figure 5 shows a non-linear profile for a Y-beam;

Figure 6(a) schematically shows deformation of part of a CMM;
And

Figure 6(b) schematically shows a Y-beam for a CMM.

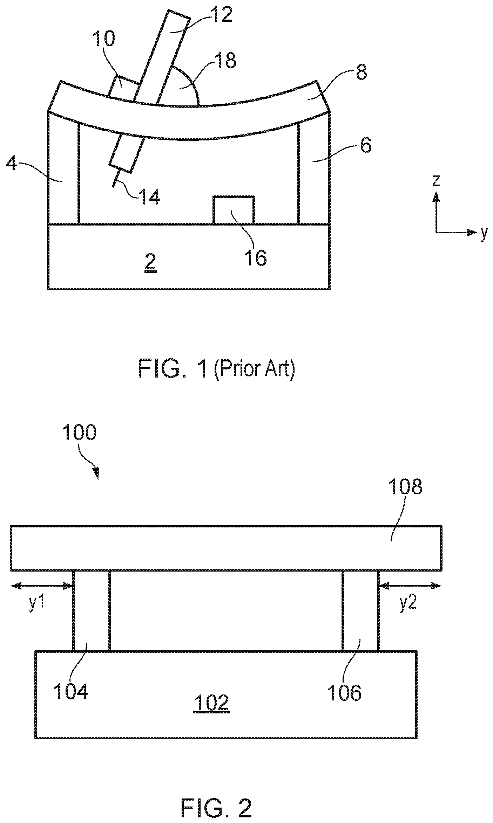

Figure 1 shows a prior art Coordinate measurement machine (CMM) comprising a base 2 on which are mounted a first support 4 and a second support 6. A Y-beam is fixably mounted to the ends of the first 4 and second 6 supports distal to the base 2. X-beam 10 is movably mounted at one end to the Y-beam and at a second end of X-beam 10 is movable mounted to an additional support which is parallel to and spaced apart from the Y-beam 8 (not shown) such that the X-beam 10 extends in a direction perpendicular to the elongate direction of the Y-beam 8. In the absence of the X-beam the Y-beam is linear and has a profile which extends parallel to the y-axis. The X-beam 10 can move along the length of Y-beam 8. A quill 12 is movably mounted to X-beam 10. The quill 12 can move along the X-beam 10 between the Y-beam and the additional support. A tool 14 for example a probe head and a measurement probe is mounted to an end of the quill 12 proximal to the base 2. The quill 12 is mounted so as to be movable perpendicular to the X-beam 10 in order to move the tool 14 closer to or farther from the base 2. This arrangement allows the tool 14 to be movable in 3-dimensions relative to an object to be measured 16. Movement of the X-beam 10 along the Y-beam 8 moves the tool 14 in the y-direction, movement of the quill 12 along the X-beam 10 moves the tool 14 in the x-direction (the x-direction being into and out of the plane of the page in Figure 1), and movement of the quill 12 perpendicular to the X-beam 10 moves the tool 14 in the z-direction.

As can be seen in Figure 1, quill 12 and X-beam 10 are at an angle 18 relative to the y-axis. This is due to the load applied to the Y-beam by the X-beam and quill, in this case the weight of the X-beam and quill which causes the Y-beam to sag. Sagging of the Y-beam due to the weight of the X-beam and quill causes a change in orientation of the X-beam and quill, i.e. a change in height and/or angle relative to the vertical z-axis. The change in angle of the X-beam and quill relative to the vertical z-axis is referred to as roll or YRX (i.e. movement along the y-axis leading to roll about the x-axis). The deformation (sag) of the Y-beam due to the load applied by the X-beam thereon varies for different locations of the X-beam along the Y-beam and so YRX and height of the X-beam and quill also vary for different locations of the X-beam along the Y-beam.

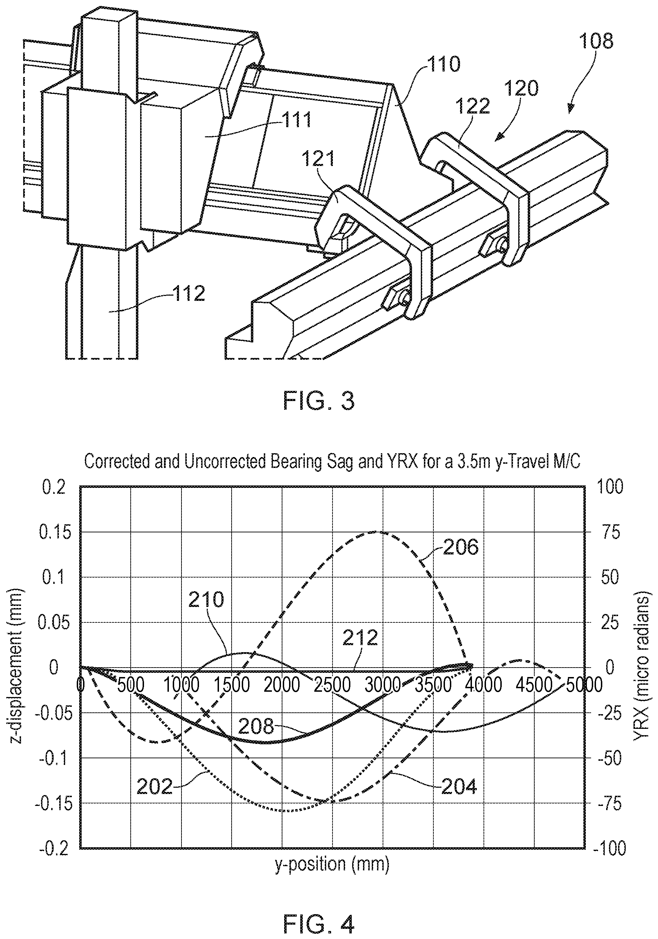

Figure 2 shows a schematic representation of part of a CMM. A base 102, and support are shown. In this embodiment the support comprises a Y-beam 108. The Y-beam 108 is mounted on and extends between first 104 and second 106 pillars. In this embodiment the Y-beam 108 extends beyond the first 104 and second 106 pillars a distance $y_1$ and $y_2$ with $y_1$ being less than $y_2$. Figure 3 shows an embodiment of an X-beam 110 mounted to the Y-beam 108 via an arrangement 120 in order to facilitate movement of the X-beam 110 along the Y-beam 108. The X-beam 110 is mounted to the Y-beam via a first mount 121 and a second mount 122, each of the first 121 and second 122 mounts being mounted to the Y-beam 108 via bearings. The front and rear bearings being spaced apart in the elongate direction of the Y-beam 108. Figure 3 also shows quill 112 which is movable vertically via quill mount 111. Quill mount 111 is configured to be movable along the elongate direction of X-beam 110.

It is possible using beam theory to calculate YRX for any position of the X-beam 110 along the Y-beam 108. It is also possible to calculate YRX for any position of the X-beam 110 along the Y-beam 108 experimentally. It is also possible to calculate YRX for any position of the X-beam 110 along the Y-beam 108 using a numerical method.

Figure 4 shows calculations for bearing sag and YRX for a 3.5 metre y-travel beam (i.e. a Y-beam which allows for 3.5 meters of travel of an X-beam along the Y-beam for measurement purposes, additional movement may be allowed to facilitate tool change).

Figure 4 shows a first set of calculations relating to a Y-beam having a straight profile when not loaded by the X-beam, i.e. the Y-beam is linear. A first dashed line 202 represents the sag (due to X-beam weight) of the Y-beam for locations of a front bearing of the X-beam along the Y-beam calculated using beam theory. A second dashed line 204 represents the sag due (to X-beam weight) of the Y-beam for locations of a rear bearing of the X-beam along the Y-beam calculated using beam theory.

From the calculations 202 and 204 YRX values 206 can be calculated. This can be achieved by subtracting the sag at the rear bearing from the sag at the front bearing for a particular location in order to find the difference in sag for a particular location of the X-beam along the Y-beam. The difference is then divided by the pitch of the bearings (in the embodiment illustrated the pitch is 850 mm). This gives a value for YRX for the particular location of the X-beam along the Y-beam. Performing this calculation for all locations of the X-beam along the Y-beam and subtracting the y = 0 value of YRX from each subsequent position gives the third dotted line 206 shown in Figure 4.

In order to improve the measurement accuracy as well as simplify measurement operations it is desirable to reduce or eliminate YRX. This can be achieved by changing the profile of the Y-beam.

It is possible to calculate the profile of a Y-beam required which would reduce YRX to substantially zero for all positions of the X-beam along the Y-beam. Referring to Figure 2, it will be appreciated that when the X-beam is located directly above either of pillars 104, 106 the amount of distortion to Y-beam 108 will be minimal. It will also be appreciated that when the X-beam is located in the middle of pillars 104, 106 the amount of displacement of the Y-beam 108 will be largest (it is noted that because the distances $y_1$ and $y_2$ shown in Figure 2 are not equal, that the largest displacement may not be when the X-beam is located exactly centrally between pillars 104, 106). Still further, it will be appreciated that if the X-beam is located outside the middle of the two pillars 104, 106 (i.e. at points corresponding to $y_1$ or $y_2$) that there will be deformation of Y-beam 108 due to the load applied by the X-beam.

In order to counteract the deformation of the Y-beam 108 due to the load applied by the X-beam at all locations of the X-beam along the Y-beam 108, it will be understood that the beam can be profiled such that the Y-beam's profile increases in height (in the z-direction) based on the amount of deflection caused by load applied by the X-beam to a Y-beam having a linear profile. In the current embodiment of a Y-beam supported by two pillars 104, 106 this will mean the profiled (i.e. non-linear) Y-beam having a profile corresponding to a fourth order polynomial of the form:

$$z = A + By + Cy^2 + Dy^3 + Ey^4$$

For any given values of coefficients A, B, C, D, E beam theory can be used to calculate the sag (due to X-beam weight) of the Y-beam for locations of a front bearing of the X-beam along the Y-beam and the sag due (to X-beam weight) of the Y-beam for locations of a rear bearing of the X-beam along the Y-beam, i.e. it is possible to calculate values analogous to lines 202, 204 of Figure 4 for any profile of the Y-beam. From these values, YRX of the X-beam can be calculated, i.e. values analogous to the line 206 shown in Figure 4.

It is possible to use a numerical method, for example the GRG non-linear model of Microsoft XL (RTM) to iteratively determine a values of coefficients A, B, C, D, E such that the X-beam is maintained at a substantially constant orientation for all locations along the Y-beam.

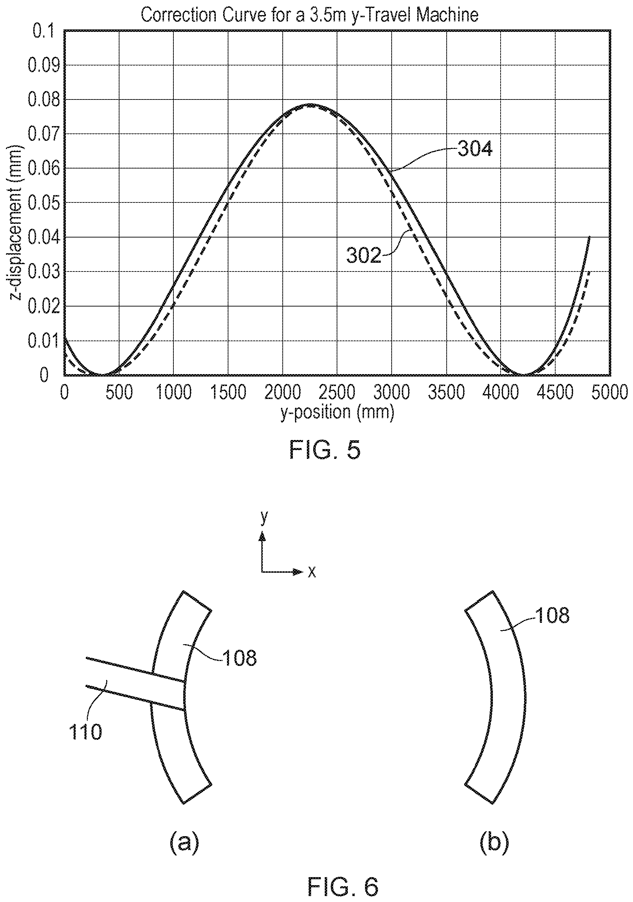

Figure 5 shows a desired non-linear profile 302 required for a Y-beam such that the X-beam is maintained at a substantially constant orientation for all locations along the Y-beam. For the profile 302 shown in Figure 5 the sag (due to X-beam weight) of the Y-beam for locations of a front bearing of the X-beam along the Y-beam 208 (analogous to line 202) and the sag due (to X-beam weight) of the Y-beam for locations of a rear bearing of the X-beam along the Y-beam 210 (analogous to 204) have been calculated and are shown in Figure 4. Also shown in Figure 4 is line 212 (analogous to line 206) which shows the YRX values for all locations of the X-beam along a Y-beam having the profile 302 shown in Figure 5.

Alternatively, it is also possible to determine the coefficients A, B, C, D by calculation.

In other embodiments the desired profile of the Y-beam can be determined experimentally.

In one embodiment a beam having the desired profile is manufactured by a linear beam having the desired length being located on two supports which correspond to the supports of the CMM and then can be machined to give the desired profile.

Depending on the machining technique used it may be necessary to apply a cutter radius offset such as that represented by line 304 of Figure 5.

In an alternative embodiment a beam having the desired profile is manufactured by distorting a beam and machining the beam flat. This can be achieved by locating a beam on two pillars (or otherwise suspending the beam and applying a load to the beam). For example, the beam (which may or may not be a linear beam) can be loaded with at least one weight, e.g. weights suspended from one or more locations along the beam between two pillars can be used to distort the beam. The top surface of the beam can then be machined flat. After the beam has been machined flat, the weights can be removed, and the unloaded beam assumes the desired conformation. The positioning of the weights and their mass will depend on the desired conformation of the beam after machining, which in turn depends on factors including the length of the beam, beam cross-section, stiffness of the beam, and the load to be applied by (for example) the X-beam during use. Calculations for determining the mass of the weights needed and their locations can involve beam theory or can be determined experimentally.

While an embodiment relating to reducing YRX has been described, it will be understood that in other embodiments similar methodology can be applied to the X-beam and quill as have been described above in relation to the Y-beam and X-beam for example to reduce XRY (i.e. roll of the quill at positions along the X-beam). In still further embodiments the profile of the Y-beam is such that the change in height (i.e. z-position) of the X-beam is reduced for all locations of the X-beam along the Y-beam. In this case beam theory, or experimentation, or a numerical method may be used to determine the height of the X-beam in positions along the Y-beam and a numerical method, or calculation, or experimentation may be used to calculate the desired profile of the Y-beam. Other embodiments can comprise an X-beam profiled so as to reduce the change in height of the quill in positions of the quill along the X-beam.

Figure 6(a) schematically shows another example of deformation of a support 108 that can occur due to the load applied by X-beam 110 in plan view, in the figure the deformation of the Y-beam 108 has been exaggerated for illustrative purposes. In the example shown in Figure 6(a), Y-beam 108 comprises a profile which is linear in a horizontal plane (i.e. parallel to the y-axis). in the absence of a load applied by the X-beam 110. When the X-beam 110 exerts a load on the Y-beam 108, the Y-beam 108 is deformed towards the measurement area (i.e. the area under the X-beam. As can be seen from Figure 6(a) because of the deformation of Y-beam 108, the X-beam 110 no longer extends parallel to the x-axis, the X-beam 110 rotates about an axis in the z-direction (YRZ).

Figure 6(b) schematically shows a Y-beam 108 configured to compensate for the deformation of the Y-beam shown in Figure 6(a) and so reduce or eliminate the rotation (YRZ) of the X-beam. The profile of Y-beam 108 shown in Figure 6(b) is prior to an X-beam being mounted thereto. The profile of the Y-beam 108 in Figure 6(b) can be calculated using beam theory or experimentation in a similar manner to that described for previous embodiments by determining the deformation of a straight Y-beam (i.e. the Y-beam of Figure 6(a)) when the load from the X-beam is applied for all locations along the Y-beam. Once the deformations of the Y-beam are known, the above method can be used to determine a profile of Y-beam 108 to reduce or substantially eliminate YRZ.

In some embodiments the Y-beam can be manufactured to have a profile configured to compensate for the YRX and YRZ deformations.

While in some of the above embodiments a coordinate measuring machine comprising two spaced apart Y-beams have been described, in further embodiments two spaced apart supports may be provided, where a first of the spaced apart supports comprises a Y-beam as described above (comprising a beam which is supported on two (or more) pillars) and the second support comprises a substantially inflexible support, i.e. a support which does not change profile due to the weight of an X-beam on the support. Such a support could comprise a solid granite support, e.g. a piece of granite having a length in the Y-direction required to allow the desired amount of X-beam movement, be suitably shaped for mounting the X-beam thereto, and a height (in the Z-dimension) such that the support extends from the base to the desired height of the support.

**Claims**

1. A positioning apparatus (100) comprising a support (108) extending in a first direction, and a beam (110) extending in a second direction, the beam (110) movably mounted to the support (108) so as to be movable in the first direction and exerts a load on the support (108), **characterised in that** the support (108) comprises a profile which when the beam (110) exerts the load thereon the profile of the support (108) is deformed such that the beam (110) is maintained at a substantially constant orientation for all locations of the beam along the support (108).

2. A positioning apparatus according to claim 1, wherein deformation of the support (108) by the load applied by the beam (110) is such that the beam (110) is maintained at a substantially constant height for all locations of the beam (110) along the support (108).

3. A positioning apparatus according to claim 1 or claim 2, wherein the beam (110) is maintained at a substantially constant angle relative to a horizontal plane.

4. A positioning apparatus according to claim 3, wherein the beam (110) extends between the support (108) and a substantially inflexible support.

5. A positioning apparatus as claimed in any of claims 1 to 3, wherein the support (108) comprises a pair of substantially parallel spaced apart supports.

6. A positioning apparatus according to claim 5, wherein the beam (110) extends between the pair of spaced apart supports and is movably mounted thereto so as to be movable in the first direction.

7. A positioning apparatus according to claim 5 or claim 6 wherein a first support of the pair of parallel spaced apart supports is optimised for maintaining the beam (110) at a constant angle, and a second support of the pair of parallel spaced apart supports is optimised for maintaining the beam (110) at a constant height.

8. A positioning apparatus according to any preceding claim wherein the positioning apparatus (100) comprises a coordinate measurement machine.

9. A method of manufacturing the positioning apparatus of any of claims 1 to 8 comprising machining the support (108) to have a profile such that when the beam (110) exerts the load thereon the profile of the support (108) is deformed such that the beam (110) is maintained at a substantially constant orientation for all locations of the beam (110) along the support (108).

10. A method according to claim 9 wherein the profile is a non-linear profile.

11. A method according to claim 10 wherein at least part of profile is curved.

12. A method according to any of claims 9 to 11 wherein an error map is created for deviations of height and/or angle of the beam (110) for locations of the beam (110) along the support (108).

13. A method of measuring an object using the positioning apparatus of any of claims 1 to 8 comprising deforming the support (108) by a load applied by the beam (110) as the beam (110) moves along the support (108) in the first direction such that the beam (110) is maintained at a substantially constant orientation for all locations of the beam (110) along the support (108).

14. A method according to claim 13 wherein the load applied by the beam (110) to the support (108) is due to the weight of the beam (110).

**Patentansprüche**

1. Positionierungsvorrichtung (100), umfassend eine Stütze (108), die sich in einer ersten Richtung erstreckt, und einen Träger (110), der sich in einer zweiten Richtung erstreckt, wobei der Träger (110) beweglich an der Stütze (108) montiert ist, um in der ersten Richtung beweglich zu sein, und eine Last auf die Stütze (108) ausübt, **dadurch gekennzeichnet, dass** die Stütze (108) ein Profil umfasst, das, wenn der Träger (110) die Last darauf ausübt, das Profil der Stütze (108) verformt wird, so dass der Träger (110) für alle Positionen des Trägers entlang der Stütze (108) in einer im Wesentlichen konstanten Ausrichtung gehalten wird.

2. Positionierungsvorrichtung nach Anspruch 1, wobei die Verformung der Stütze (108) durch die von dem Träger (110) aufgebrachte Last derart ist, dass der Träger (110) für alle Positionen des Trägers (110) entlang der Stütze (108) in einer im Wesentlichen konstanten Höhe gehalten wird.

3. Positionierungsvorrichtung nach einem der Ansprüche 1 oder 2, wobei der Träger (110) in einem im Wesentlichen konstanten Winkel relativ zu einer horizontalen Ebene gehalten wird.

4. Positionierungsvorrichtung nach Anspruch 3, wobei sich der Träger (110) zwischen der Stütze (108) und einer im Wesentlichen unflexiblen Stütze erstreckt.

5. Positionierungsvorrichtung nach einem der Ansprüche 1 bis 3, wobei die Stütze (108) ein Paar von im Wesentlichen parallelen beabstandeten Stützen umfasst.

6. Positionierungsvorrichtung nach Anspruch 5, wobei sich der Träger (110) zwischen dem Paar von beabstandeten Stützen erstreckt und beweglich daran montiert ist, um in der ersten Richtung beweglich zu sein.

7. Positionierungsvorrichtung nach einem der Ansprüche 5 oder 6, wobei eine erste Stütze des Paars von parallelen beabstandeten Stützen optimiert ist, um den Träger (110) in einem konstanten Winkel zu halten, und eine zweite Stütze des Paars von parallelen beabstandeten Stützen optimiert ist, um den Träger (110) in einer konstanten Höhe zu halten.

8. Positionierungsvorrichtung nach einem der vorhergehenden Ansprüche, wobei die Positionierungsvorrichtung (100) eine Koordinatenmessmaschine umfasst.

9. Verfahren zum Herstellen der Positionierungsvorrichtung nach einem der Ansprüche 1 bis 8, umfassend das Bearbeiten der Stütze (108), um ein Profil aufzuweisen, so dass, wenn der Träger (110) die Last darauf ausübt, das Profil der Stütze (108) verformt wird, so dass der Träger (110) für alle Positionen des Trägers (110) entlang der Stütze (108) in einer im Wesentlichen konstanten Ausrichtung gehalten wird.

**10.** Verfahren nach Anspruch 9, wobei das Profil ein nichtlineares Profil ist.

**11.** Verfahren nach Anspruch 10, wobei mindestens ein Teil des Profils gekrümmt ist.

**12.** Verfahren nach einem der Ansprüche 9 bis 11, wobei eine Fehlerkarte für Abweichungen der Höhe und/oder des Winkels des Trägers (110) für Positionen des Trägers (110) entlang der Stütze (108) erstellt wird.

**13.** Verfahren zum Messen eines Objekts unter Verwendung der Positionierungsvorrichtung nach einem der Ansprüche 1 bis 8, umfassend das Verformen der Stütze (108) durch eine von dem Träger (110) aufgebrachte Last, während sich der Träger (110) entlang der Stütze (108) in der ersten Richtung bewegt, so dass der Träger (110) für alle Positionen des Trägers (110) entlang der Stütze (108) in einer im Wesentlichen konstanten Ausrichtung gehalten wird.

**14.** Verfahren nach Anspruch 13, wobei die von dem Träger (110) auf die Stütze (108) aufgebrachte Last auf das Gewicht des Trägers (110) zurückzuführen ist.

**Revendications**

**1.** Un appareil de positionnement (100) comprenant un support (108) s'étendant dans une première direction, et un faisceau (110) s'étendant dans une seconde direction, le faisceau (110) étant monté de façon mobile sur le support (108) de manière à être déplaçable dans la première direction et à exercer une charge sur le support (108), **caractérisé en ce que** le support (108) comprend un profil qui, lorsque le faisceau (110) exerce la charge sur celui-ci, le profil du support (108) est déformé de sorte que le faisceau (110) est maintenu à une orientation sensiblement constante pour tous les emplacements du faisceau le long du support (108).

**2.** Un appareil de positionnement selon la revendication 1, dans lequel la déformation du support (108) par la charge appliquée par le faisceau (110) est telle que le faisceau (110) est maintenu à une hauteur sensiblement constante pour tous les emplacements du faisceau (110) le long du support (108).

**3.** Un appareil de positionnement selon la revendication 1 ou la revendication 2, dans lequel le faisceau (110) est maintenu à un angle sensiblement constant par rapport à un plan horizontal.

**4.** Un appareil de positionnement selon la revendication 3, dans lequel le faisceau (110) s'étend entre le support (108) et un support sensiblement inflexible.

**5.** Un appareil de positionnement selon l'une quelconque des revendications 1 à 3, dans lequel le support (108) comprend une paire de supports espacés sensiblement parallèles.

**6.** Un appareil de positionnement selon la revendication 5, dans lequel le faisceau (110) s'étend entre la paire de supports espacés et est monté de façon mobile sur celle-ci de manière à être déplaçable dans la première direction.

**7.** Un appareil de positionnement selon la revendication 5 ou la revendication 6, dans lequel un premier support de la paire de supports espacés parallèles est optimisé pour maintenir le faisceau (110) à un angle constant, et un second support de la paire de supports espacés parallèles est optimisé pour maintenir le faisceau (110) à une hauteur constante.

**8.** Un appareil de positionnement selon l'une quelconque des revendications précédentes, dans lequel l'appareil de positionnement (100) comprend une machine à mesurer tridimensionnelle.

**9.** Un procédé de fabrication de l'appareil de positionnement selon l'une quelconque des revendications 1 à 8, comprenant l'usinage du support (108) pour avoir un profil tel que lorsque le faisceau (110) exerce la charge sur celui-ci, le profil du support (108) est déformé de sorte que le faisceau (110) est maintenu à une orientation sensiblement constante pour tous les emplacements du faisceau (110) le long du support (108).

**10.** Un procédé selon la revendication 9, dans lequel le profil est un profil non linéaire.

**11.** Un procédé selon la revendication 10, dans lequel au moins une partie du profil est incurvée.

**12.** Un procédé selon l'une quelconque des revendications 9 à 11, dans lequel une carte d'erreur est créée pour les écarts de hauteur et/ou d'angle du faisceau (110) pour les emplacements du faisceau (110) le long du support (108).

**13.** Un procédé de mesure d'un objet à l'aide de l'appareil de positionnement selon l'une quelconque des revendications 1 à 8, comprenant la déformation du support (108) par une charge appliquée par le faisceau (110) lorsque le faisceau (110) se déplace le long du support (108) dans la première direction de sorte que le faisceau (110) est maintenu à une orientation sensiblement constante pour tous les emplacements du faisceau (110) le long du support (108).

14. Un procédé selon la revendication 13, dans lequel la charge appliquée par le faisceau (110) au support (108) est due au poids du faisceau (110).

FIG. 1 (Prior Art)

FIG. 2

FIG. 3

Corrected and Uncorrected Bearing Sag and YRX for a 3.5m y-Travel M/C

FIG. 4

FIG. 5

FIG. 6

**EP 4 413 320 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5505004 A
- EP 2594893 A
- JP S6186109 A
- US 3296901 A
- SE 394513 B